# EUROPEAN PATENT SPECIFICATION

(11) **EP 0 749 888 B1**
(45) Date of publication and mention of the grant of the patent: **29.08.2001**
(21) Application number: 96201605.1
(22) Date of filing: 08.06.1996
(51) Int. Cl.: B62D 5/08

(54) **Control valve for a hydraulic steering system**
Steuerventil für ein hydraulisches Lenksystem
Valve de commande pour un système de direction hydraulique

(30) Priority: 23.06.1995 EP 95830266
(43) Date of publication of application: 27.12.1996
(73) Proprietor: NEW HOLLAND ITALIA S.p.A., I-41100 Modena (IT)
(72) Inventor: Gregorio, Angelo, 41100 Modena (IT); Baldrati, Claudio, 41100 Modena (IT)
(74) Representative: Vandenbroucke, Alberic

(56) References cited:
- EP-A- 0 081 658
- DE-A- 1 530 797
- PATENT ABSTRACTS OF JAPAN vol. 011, no. 255 (M-617), 19 August 1987 & JP-A-62 061877 (KUBOTA LTD), 18 March 1987,

## Description

The present invention relates to a control valve for a hydraulic steering system intended for agricultural vehicles such as tractors.

It is known to provide tractors with either of two forms of steering, termed reactive and non-reactive steering. Reactive steering is essentially the same as that used in road vehicles in which the driver can feel the steering and will notice a reaction from the road wheels if the vehicle drives over a bump or the wheels get stuck in a furrow. Non-reactive steering, on the other hand, is used when towing a plough. Here the driver can set a desired direction and the tractor will not deviate from this direction, even if obstructions are met by the wheels. Non-reactive steering is clearly desirable when e.g. ploughing a field but it is disconcerting when used on roads because the driver must remember to turn the steering wheel on leaving as well as entering a bend. A vehicle with non-reactive steering has no self-righting action and if the steerable wheels are set at an angle, the vehicle will continue to move indefinitely in a circle of constant radius.

In JP-A-62.061.877, a power steering system comprising the features defined in the preamble of claim 1 is disclosed. Said steering system has a control valve disposed inbetween a steering valve, operably connected to a steering wheel, and a hydraulic actuator, operably connected to the steerable wheels of a vehicle. The control valve has two settings, one in which there is a permanent connection between the steering valve and the hydraulic actuator (corresponding to reactive steering), and one in which this connection is prevented (corresponding to non-reactive steering). To enable steering movements when the control valve is in the non-reactive steering condition, the complete valve has to be shifted to the setting for reactive steering, which may prolong the response time of the valve and hence may cause some hesitation in the steering action. Moreover, to determine that a steering movement is requested, an expensive pressure differential sensor must be provided for controlling the position of the control valve through an electric circuit.

It is therefore an object of the present invention to overcome the drawbacks of the prior art arrangements and to provide a simple control valve for use in a hydraulic steering system, especially for an agricultural vehicle, to enable the steering characteristics to be switched between reactive and non-reactive steering.

According to the present invention, there is provided a control valve for use in a hydraulic steering system of an agricultural vehicle having the option of reactive and non-reactive steering and comprising a steering valve of the reactive type for controlling the supply of hydraulic fluid to jacking means having opposed working chambers serving to move the steerable vehicle wheels in opposite directions, the control valve being connectable between the steering valve and the jacking means and having a first setting in which fluid flow in both directions between the steering valve and the working chambers of the jacking means is possible at all times.

The control valve is characterized in that it further has a second setting in which return flow of hydraulic fluid from any one working chamber of the jacking means to the steering valve is only possible when a positive pressure is present at the outlet of the steering valve connected by the control valve to the opposed working chamber of the jacking means.

The control valve has two inlets for lines leading to the steering valve, two outlets for lines leading to the jacking means, two one-way valves each connected between a respective inlet and a respective outlet, means for acting on each one-way valve to open it for flow in both directions in response to the presence of a positive pressure at the inlet connected to the other one-way valve and means for selectively establishing permanent connections in both directions between the respective inlets and outlets regardless of the pressures prevailing at the inlets and outlets.

The means for establishing a permanent connection between the respective inlets and outlets may either be means for selectively by-passing the one-way valves or means for selectively rendering the one-way valve inoperative, such as by lifting the valve closure members of the one-way valves off their seats.

The control valve of the invention can be used as an adjunct to a steering valve of the reactive type to allow non-reactive steering to be selected. To convert a reactive steering valve to one that is non-reactive, it is necessary to prevent the positive reaction pressures generated in the jacking means when the steerable wheels meet an obstruction from reaching the steering valve. It is not possible simply to use one-way valves on their own to prevent flow from the hydraulic jacking means to the steering valve because during normal steering movements when hydraulic fluid is supplied from the steering valve to one working chamber of the jacking means, fluid is returned from another working chamber to the steering valve and such return flow must not be prevented. The valve must therefore be capable of distinguishing between return flow resulting from a reaction from the steerable wheels and return flow resulting from the supply of hydraulic fluid to another working chamber of the jacking means by the steering valve as a result of movement of the steering wheel by the driver.

In the present invention, the pressure at the inlets of the control valve is monitored, while the valve is set to provide non-reactive steering. If neither inlet is at a high pressure, then return flow from the jacking means to the steering valve is prevented. On the other hand, if there is a positive pressure at one of the inlets connected to the steering valve, then not only is fluid allowed to flow through the control valve to the associated working chamber of the hydraulic jacking means, but return flow is permitted in the line connecting the other working chamber of the jacking means to the steering valve.

The hydraulic jacking means preferably comprise a double acting piston-cylinder unit acting on each of the steerable wheels of the vehicle. Because the wheels are normally interlinked mechanically to move together, it would suffice to provide a single double acting piston-cylinder unit acting on only one of the steerable wheels or to provide two single acting piston-cylinder units each acting on a respective wheel but it is preferred to distribute the steering force evenly between the two wheels.

The invention will now be described in further detail, by way of example, with reference to the accompanying drawings, in which:
Figure 1 is a schematic representation of a hydraulic steering system of a tractor having selectable steering characteristics;
Figure 2 is a partial section through a control valve of a first embodiment of the invention;
Figure 3 is a section taken along the line III-III in Figure 2;
Figure 4 is a section taken along the line IV-IV in Figure 2;
Figure 5 is a lengthwise section through a second embodiment of the control valve;
Figures 6 and 7 are views similar to Figure 5 but showing the control valve under other operating conditions;
Figure 8 is a section similar to that of Figure 5 showing a third embodiment of the control valve; and
Figure 9 is a view similar to Figure 8 but showing another operating condition of the third embodiment.

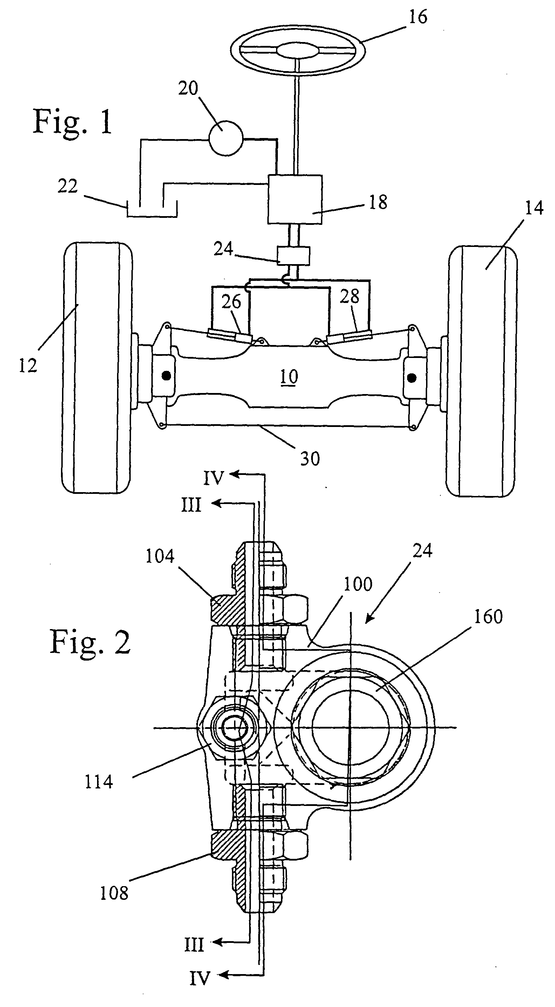

In Figure 1, a tractor has a front axle 10 with two steerable wheels 12 and 14. The steering wheel 16 of the tractor is connected to a known steering valve 18 of the reactive type, for example a Danfoss valve, that has inlet connections leading to an engine driven pump 20 and a hydraulic fluid reservoir 22. The steering valve 18 also has two fluid outlets that are connected by way of a control valve 24 of the present invention to the opposed working chambers of each of two double acting hydraulic jacks 26 and 28 that act on the respective steerable wheels 12 and 14. The wheels are also connected to one another by a tie rod 30, so as always to move in unison.

The control valve 24 has a first setting that connects each of its two inlets connected to the steering valve 18 to a respective one of its two outlets connected to opposite sides of each double acting hydraulic jack 26, 28. In this setting, when the steering wheel 16 is turned, the pump 20 is connected by the steering valve 18 to one of the working chambers of each jack 26, 28 and the fluid from the opposed working chambers of the jacks 26, 28 is returned to the reservoir 22 by the steering valve 18. The fluid displacement results in movement of the pistons of the jacks 26 and 28 until the steerable wheels 12 and 14 reach the position corresponding to the desired position set by the steering wheel. At this point, the steering valve 18 will isolate the jacks 26 and 28 from the pump 20 and the reservoir 22.

If in this setting of the control valve 24 one of the steerable wheels 12 and 14 should meet an obstruction tending to make the vehicle veer away from the direction set by the steering wheel 16, then the jacks 26 and 28 will produce a pressure difference on the lines connecting them to the steering valve 18. Because the steering valve 18 is of the reactive type, the steering valve 18 will apply a torque to the steering column, tending to rotate the steering wheel 16 in the direction corresponding to the angle of the steerable wheels as induced by the obstruction.

In the other setting of the control valve 24, flow of hydraulic fluid from the steering valve 18 to a working chamber of one of the jacks 26, 28 can always take place in the forward direction but return flow is normally blocked. For this reason, if pressure is built up in the jacks 26, 28 on account of a steerable wheel 12, 14 meeting an obstruction, that high pressure is not transmitted back to the steering valve 18 and there is therefore no reaction torque on the steering wheel 16. The steering system therefore behaves as a non-reactive system. However, even in this setting of the valve 24 it is necessary to allow return flow from the jacks 26, 28 to the reservoir 22 when the steering wheel is turned by the tractor operator and to enable this to take place the control valve 24 acts to permit return flow along one of the lines connecting the steering valve 18 to the jacks 26, 28 when a high pressure is sensed at the other outlet of the steering valve 18 connected to the jacks 26, 28. Such a high pressure will be present when return flow is required to enable a movement of the steerable wheels 12 and 14 initiated by rotation of the steering wheel 16 but will be absent when the steerable wheels are deflected by encountering an obstacle.

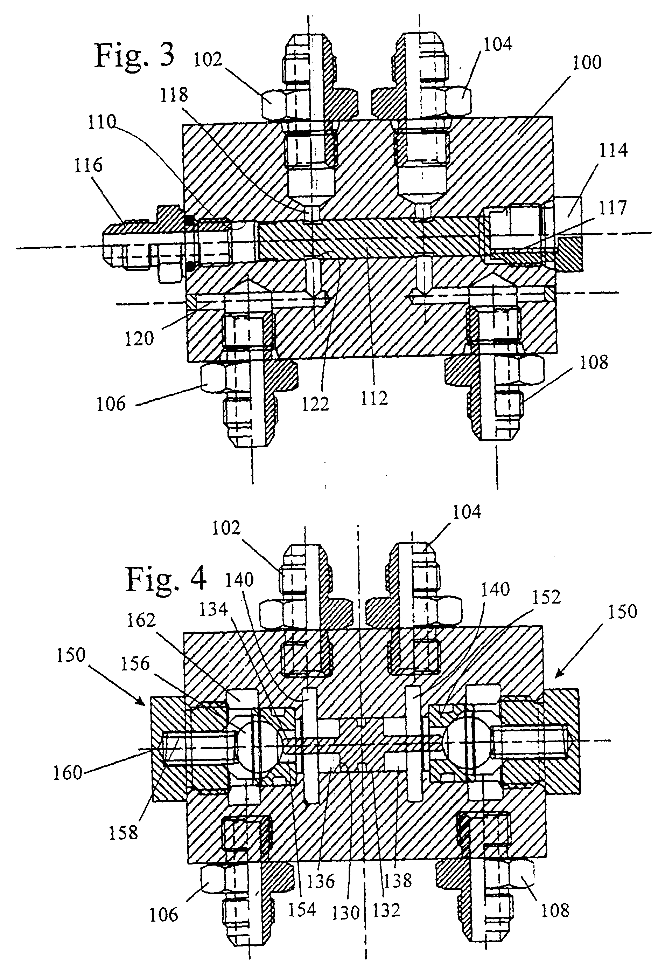

A first embodiment of the control valve 24 that operates in the manner described above to allow the steering characteristics of a vehicle to be varied will now be described by reference to Figures 2 to 4, in which Figure 2 is a side view of the valve 24 and Figures 3 and 4 are sections on the lines III-III and IV-IV respectively.

The valve 24 has a main body 100 with two inlets 102, 104 and two outlets 106, 108. The inlets 102, 104 are externally connected to lines leading to the steering valve 18 and the outlets are connected to lines leading to the opposed working chambers of the jacks 26, 28.

Within the main body 100, each of the inlets 102 and 104 is connected to a respective one of the two outlets 106 and 108 by two parallel paths, one path being shown in the section of Figure 3 and the other in the section of Figure 4. It will be noted that the control valve 24 is generally symmetrical about a central plane, and the functions served by the two halves of the valve 24 are identical. To avoid duplication of description, the same reference numerals have been allocated to parts serving the same function.

As shown in Figure 3, the body 100 has a first transverse bore 110 in which there is slidably received a valve spool 112. The bore 110 is closed at one end by a blanking plug 114 and has a connector 116 at its other end to allow the application of a control pressure for moving the valve spool 112 from left to right as viewed. A return spring 117 acts between the right hand end of the spool 112, as viewed, and the plug 114. This method of moving the valve spool 112 is given only as an example and one may alternatively provide pressure chambers at both ends of the spool 112. In fact, the spool also may be electrically controlled by a solenoid or even mechanically controlled, if desired.

The bore 110 communicates with the inlets 102, 104 and the outlets 106, 108 through respective drillings 118, 120. The spool 112 has an annular recess 122 that permits fluid to flow from the drilling 118 to the drilling 120 when the spool is in the position illustrated. When, on the other hand, the spool 112 is moved to the left, as viewed, then the body of the spool 112 closes off the drillings and isolates the inlet 102 from the outlet 106. Thus, with the spool 112 in the position illustrated, the inlets 102 and 104 are permanently connected to the respective outlets 106 and 108 for flow in both directions, this being the position for reactive steering. On the other hand, when the spool is moved to the left, as viewed, there is no connection between the inlets and the outlets across the bore 110 and this is the position corresponding to non-reactive steering when fluid flow can only occur through the second fluid path now to be described with reference to Figure 4.

A stepped bore 130 is formed in a plane offset from that of the bore 110, the bore being narrowest at its centre and increasing in diameter in both directions away from the centre. A double acting piston 132 with two axially extending pins 134 is slidable within the narrowest section of the bore 130 and its two faces constitute the movable walls of two variable volume working chambers 136 and 138. Each working chamber 136, 138 communicates with a respective one of the inlets 102 and 104 through an annular recess 140 and a drilling that lies outside the plane of Figure 4. Each end of the bore 130 is closed off by a one-way valve, that is generally designated 150. Each valve 150 comprises a ring 152 that rests against a shoulder in the bore 130 and is sealed relative to the bore 130. The ring 152 has a central hole 154 that acts as the inlet to the one-way valve 150 from the working chamber 136 or 138. The ring 152 also defines a conical valve seat for a ball 156 that acts as the valve closure element, the ball 156 being urged towards the valve seat by a spring 158 that reacts against a plug 160 screwed into the end of the bore 130. Further annular recesses 162 form chambers on the opposite sides of the balls 156 from the working chambers 136 and 138 and connect the one-way valves 150 to the respective outlets 106, 108 through further drillings lying outside the plane of Figure 4.

When pressure is applied to either or both of the outlets 106 and 108, it is blocked by the one-way valves 150 and cannot reach the inlets 102 and 104 through the second fluid path as shown in Figure 4. Therefore, in case the valve spool 112 of Figure 3 is located in its left position, as viewed, meaning that there is equally no connection between the inlets 102, 104 and the outlets 106, 108 across the bore 110, any pressure generated by reaction from the steerable wheels is not conveyed to the steering valve 18 and no torque is felt on the steering wheel 16. When however a positive pressure is applied to either one of the inlets 102 and 104 by the steering valve 18, the pressure in the chamber 136 or 138 will directly act on the ball 156 of the associated one-way valve 150 to lift the ball 156 off its valve seat and supply fluid under pressure by way of the associated outlet 106 or 108 to a working chamber of the hydraulic jacks 26 and 28. At the same time, the pressure in the chamber 136 or 138 will act on the piston 132 to move it towards the other one-way valve 150. As the piston 132 is moved, its pin 134 passes through the hole 154 of the ring 152 of the other one-way valve 150 and lifts the ball 156 off its seat. The latter valve is therefore also opened to allow the return flow to the reservoir 22 of fluid from the opposed working chambers of the jacks 26 and 28.

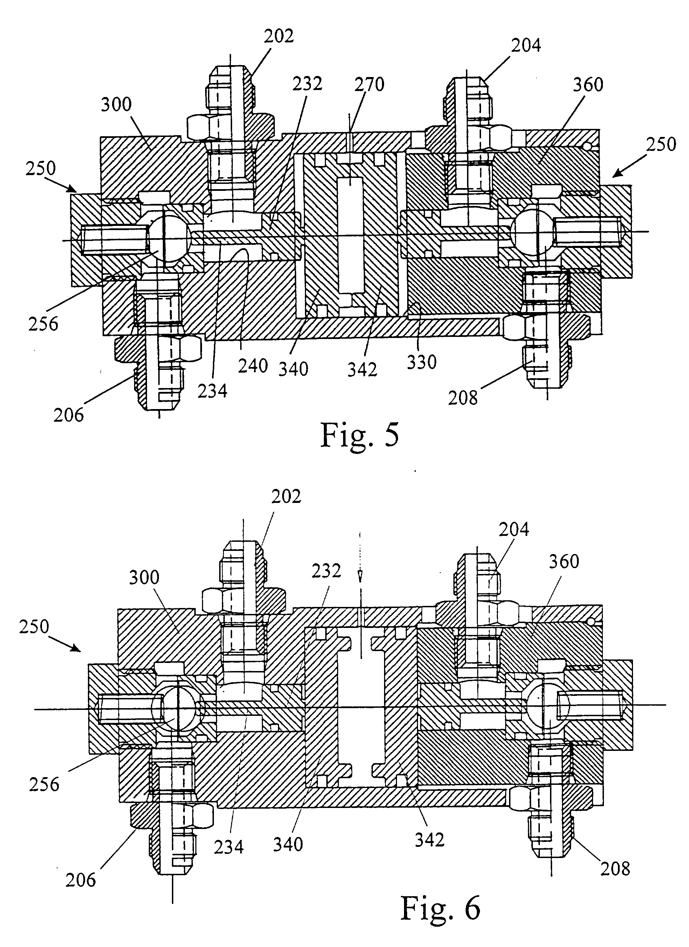

In the embodiment of Figure 5, the inlets 202 and 204 are connected to the outlets 206 and 208 only through one-way valves 250, there being no separate spool valve. Reactive steering is achieved by using a control pressure applied to a control inlet 270 to lift the balls 256 of both one-way valves simultaneously off their seats whereas non-reactive steering is achieved when there is no control pressure applied. In the non-reactive condition, steering action is obtained by opening one valve 250 directly and the other valve 250 indirectly when a positive pressure is applied to one of the two inlets 202, 204.

More specifically, the main valve body 300 in this case has a stepped bore 240 at one end which is generally similar to the left half of the bore 130 in Figure 4 and contains a sliding piston 232, a non-return valve 250 and a pin 234 on the piston 232 for lifting the ball 256 of the valve 250 off its seat. The other end of the body 300 has a large diameter bore 330 in which there are slidable two large diameter pistons 340, 342 disposed back to back one on each side of the control inlet 270. An insert 360 is then placed in the large diameter bore 330 to close it, the insert having within it the same components as the other end of the body 300. It will be appreciated that the body 300 needs to be formed in two separable parts in this case because the diameter of the pistons 340 and 342 is greater than the diameter of the bores 240 and if the body were in one piece, assembly would not be possible.

If a control pressure is applied to the control inlet 270, which is the condition shown in Figure 6, the pistons 340 and 342 are moved apart as much as possible and in the process they will displace the pistons 232 so their pins 234 will lift the balls 256 of both non-return valves 250 off their seats. The inlets 202 and 204 are then permanently connected to the outlets 206 and 208, respectively, for flow in both directions, giving rise to reactive steering. Because of the large area of the pistons 340, 342 as compared with the pistons 232, a relatively low control pressure, for example 16 bar, will suffice in maintaining both non-return valves 250 open.

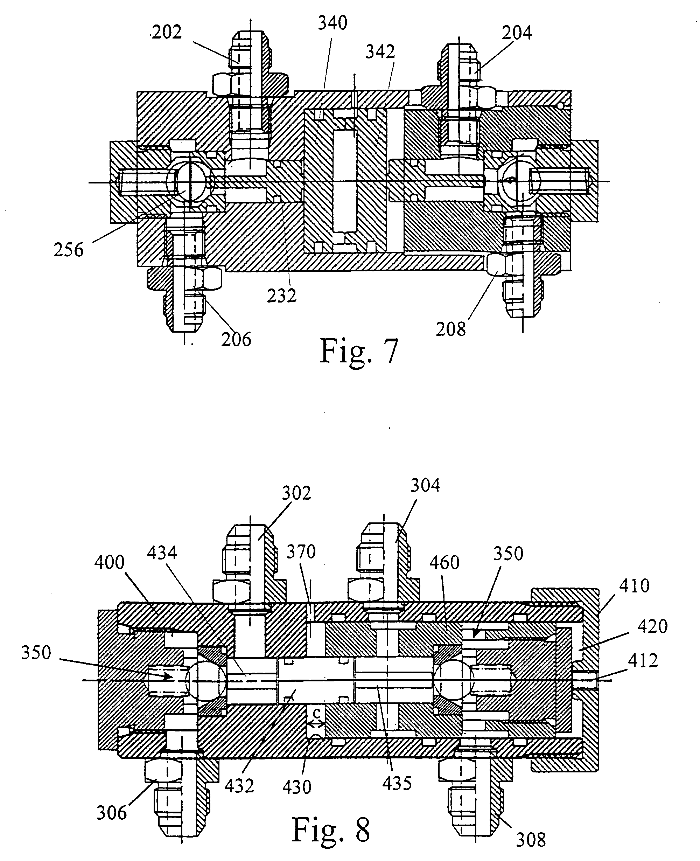

In the absence of a control pressure and when a steering action is performed, as exemplified in Figure 7, one of the pistons 232 will move the pistons 340 and 342 into abutment with one another and the four pistons 232, 340, 342 and 232 will then move as one from right to left (or vice versa) in dependence upon the pressure at the inlets 202 and 204 in the same way as the single piece double acting piston 132 in Figure 4. The control valve will therefore now provide non-reactive steering in which reaction pressures in the working chambers of the jacks 26 and 28 will be isolated from the steering valve by the non-return valves 250 but in which forward and return flow will be possible between the steering valve 18 and the jacks 26 and 28 when the relatively high pressure from the pump 20, which is typically 160-170 bar, is applied to one of the inlets 202 and 204.

The embodiment shown in Figure 8 is similar to that of Figure 5 in that the application of a control pressure opens the non-return valves 350 instead of by-passing them in order to obtain reactive steering. The control valve in this embodiment again has two inlets 302, 304 and two outlets 306, 308 all formed in a valve body 400. At its left end, the body 400 has a stepped bore that receives a sliding piston 432 with an extension pin 434 and a non-return valve 350 of the same general construction as described previously. At its other end, the body 400 has a large diameter bore 430 that receives a sliding piston assembly 460 which itself has a stepped inner bore receiving part of the piston 432 with an extension pin 435 and a non-return valve 350. Although the piston 432 is shown to be a single component, it also may be made of two parts, for ease of manufacture. The end of the body 400 is fitted with a cap 410 comprising a control pressure inlet 412 to allow hydraulic fluid to be introduced into a variable volume working chamber 420 defined between the cap 410 and the piston assembly 460.

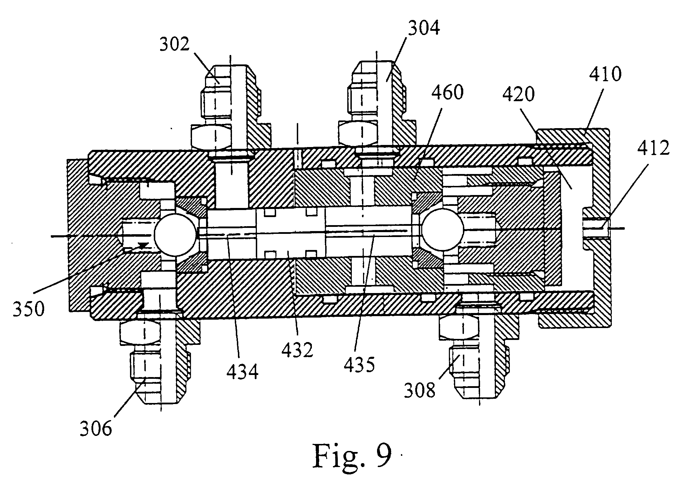

The control valve in Figure 8 is shown in the non-reactive position with the piston assembly 460 tight against the cap 410. In this position, the one-way valves 350 are normally closed and will remain closed if pressure is only present at the outlets 306, 308. If however pressure is applied to one of the inlets 302, 304, fluid will flow through the associated forward biased one-way valve and the pressure acting on the piston 432 will apply a force by way of the pin 435, respectively 434, to lift the ball of the other valve 350 off its seat. In this position, there is a gap "c" between the piston 460 and the body 400 which is larger than the maximum displacement of the ball of one of the one-way valves 350 but less than twice that displacement. As a result, when a pressure is applied to the working chamber 420 between the right hand end of the piston 460 and the cap 410 (which is the condition shown in Figure 9), the piston closes this gap completely and in the process the pins 434 lift the balls of both the one-way valves 350 off their seats, rendering the both valves inoperative and permitting fluid flow in both directions for reactive steering.

The chamber between the left hand end of the piston 460 and the body 400 has an outlet 370. This outlet is illustrated as being a vent to atmosphere to prevent pressure in this chamber from preventing movement of the piston 460. This chamber may alternatively be connected to a low pressure supply to move the piston 460 back into the illustrated non-reactive position. If the outlet 370 acts merely as an air vent, a return force for moving the piston 460 to the illustrated position will be provided by the piston 432 the first time that the inlet 302 is pressurised by the steering valve 18, after non-reactive steering has been selected, or alternatively by means of spring means (not shown) acting between the valve body 400 and the piston 460.

In all three described embodiments, the switching between steering characteristics may either be selected by the driver or it may take automatically. In the latter case, the control pressure or electrical signal required to change the steering mode may be generated in dependence upon speed, upon load, the selected transmission gear or any other parameter indicating agricultural use of the tractor as opposed to road use. The tractor steering characteristics will therefore adapt themselves to the driving conditions without any input from the driver, providing reactive steering when the vehicle is moving at speed on normal roads and non-reactive steering when e.g. ploughing or moving slowly through a field.

## Claims

1. A control valve for use in a hydraulic steering system of an agricultural vehicle having the option of reactive and non-reactive steering and comprising a steering valve (18) of the reactive type for controlling the supply of hydraulic fluid to jacking means (26, 28) having opposed working chambers serving to move the steerable vehicle wheels (12, 14) in opposite directions, the control valve (24) being connectable between the steering valve (18) and the jacking means (26, 28) and having a first setting in which fluid flow in both directions between the steering valve (18) and the working chambers of the jacking means (26, 28) is possible at all times; and
**characterized in that** the control valve (24) further has a second setting in which return flow of hydraulic fluid from any one working chamber of the jacking means (26, 28) to the steering valve (18) is only possible when a positive pressure is present at the outlet of the steering valve (18) connected by the control valve (24) to the opposed working chamber of the jacking means (26, 28).

2. A control valve according to claim 1, **characterized in that**, in said first setting, reaction forces acting on the steerable wheels (12, 14) are transmitted to the steering valve (18).

3. A control valve according to claims 1 or 2, **characterized in that**, in said second setting, reaction forces acting on the steerable wheels (12, 14) are prevented from being transmitted to the steering valve (18).

4. A control valve according to claims 1 to 3 **characterized in that** the switching between said first and second setting is effected manually by the vehicle operator.

5. A control valve according to claims 1 to 3 **characterized in that** the switching between said first and second setting is effected automatically based on a parameter indicating agricultural use of the vehicle as opposed to road use.

6. A control valve according to any of the preceding claims **characterized in that** the control valve (24) has two inlets (102, 104/202, 204/302, 304) for lines leading to the steering valve (18), two outlets (106, 108/206, 208/306, 308) for lines leading to the jacking means (26, 28) and two one-way valves (150/250/350) each connected between a respective inlet and a respective outlet.

7. A control valve according to claim 6 **characterized in that** the control valve (24) further comprises means (132/232/432) for acting on one of said one-way valves (150/250/350) to open it for flow in both directions in response to the presence of a positive pressure at the inlet connected to the other one-way valve.

8. A control valve according to claim 7 **characterized in that** the control valve (24) further comprises means (112/340, 342/420, 460) for selectively establishing permanent connections in both directions between the respective inlets (102, 104/202, 204/302, 304) and outlets (106, 108/ 206, 208/306, 308) regardless of the pressures prevailing at the inlets and outlets.

9. A control valve according to claims 6 to 8 **characterized in that** the two one-way valves (150/250/350) are symmetrically disposed in a housing at the ends of axially aligned bores (130/240/-), the pressure acting on the intake side of each valve (150/250/350) also acting on one face of a piston (132/232/432) which is slidably mounted within the associated bore to move the piston in the direction of the other one-way valve, such movement resulting in the piston (132/232/432) acting directly or indirectly on a pin (134/234/434) which opens the other one-way valve by raising the valve closure member (156/256/-) of said other one-way valve off its seat (152).

10. A control valve according to claim 9 **characterized in that** two separate pistons (232) are located in the aligned bores (240) each having on its face directed towards the associated one-way valve (250) an axially projecting pin (234) for raising the valve closure member (256) off its seat, the opposite face of each piston acting on a respective one of two further pistons (340, 342) of larger diameter which are separated by a further working chamber connectable to a control pressure, whereby in the presence of a control pressure the smaller pistons (232) are moved apart and open both one-way valves (250) for flow in both directions and in the absence of a control pressure the four pistons (232, 340, 342) move in unison to open one one-way valve (250) for flow in both directions when a positive pressure is applied to the intake side of the other one-way valve (205).

11. A control valve according to claim 9 **characterized in that** a single double acting piston (132/432) is located in the axially aligned bores (130), each face of the piston (132/432) being acted upon by the pressure prevailing at the intake side of a respective one of the one-way valves (150/350) and each face having a pin (134/434, 435) which projects axially therefrom and is aligned with a hole in the valve seat (140) of the other one-way valve (150/350), which hole is blocked by the valve closure member (156) of the other one-way valve (150/350) when the latter valve is closed.

12. A control valve according to claim 8 and any claim appended thereto **characterized in that** the means for establishing a permanent connection between the respective inlets (102, 104) and outlets (106, 108) comprises means (118, 112, 120) for selectively by-passing the one-way valves (150).

13. A control valve according to claim 12 **characterized in that** the means for selectively by-passing the one-way valves (150) comprises a spool valve (112).

14. A control valve according to claim 11 **characterized in that** one of the non-return valves (350) is mounted in a large diameter piston assembly (460) and wherein the means for establishing a permanent connection between the respective inlets (302, 304) and outlets (306, 308) comprise means (412, 420) for applying a control pressure to one end of the piston assembly (460) to move the piston assembly (460) in the valve housing (400) and reduce the distance between the one-way valves (350), the valves (350) being opened by coming into contact with the ends of the pins (434, 435) projecting from the opposite faces of the double-acting piston (432).

15. A control valve according to claim 14 **characterized in that** the piston assembly (460) is movable in the valve housing (400) over a predetermined distance (c) which is larger than the maximum displacement of one of the valve closure members but less than twice such displacement.

## Patentansprüche

1. Steuerventil zur Verwendung in einem hydraulischen Lenksystem eines landwirtschaftlichen Fahrzeuges, das die Option einer Lenkung mit Rückwirkung und einer Lenkung ohne Rückwirkung aufweist und ein Lenkventil (18) des Typs mit Rückwirkung zur Steuerung der Zufuhr von Hydraulikflüssigkeit an Hydraulikzylindereinrichtungen (26, 28) mit entgegengesetzten Arbeitskammern aufweist, die zur Bewegung der lenkbaren Räder (12, 14) des Fahrzeuges in entgegengesetzten Richtungen dienen, wobei das Steuerventil (24) zwischen dem Lenkventil (18) und den Hydraulikzylindereinrichtungen (26, 28) anschließbar ist eine erste Einstellung aufweist, bei der die Hydraulikflüssigkeitsströmung in beiden Richtungen zwischen dem Lenkventil (18) und den Arbeitskammern der Hydraulikzylindereinrichtungen (26, 28) zu allen Zeiten möglich ist,
**dadurch gekennzeichnet**, daß das Steuerventil (24) weiterhin eine zweite Einstellung aufweist, in der eine Rücklaufströmung von Hydraulikflüssigkeit von irgendeiner Arbeitskammer der Hydraulikzylindereinrichtungen (26, 28) an das Lenkventil (18) lediglich dann möglich ist, wenn ein Überdruck an dem Auslaß des Lenkventils (18) vorhanden ist, der über das Steuerventil (24) mit der gegenüberliegenden Arbeitskammer der Hydraulikzylindereinrichtungen (26, 28) verbunden ist.

2. Steuerventil nach Anspruch 1, **dadurch gekennzeichnet**, daß bei der ersten Einstellung auf die lenkbaren Räder (12, 14) einwirkende Rückwirkungskräfte auf das Lenkventil (18) übertragen werden.

3. Steuerventil nach Anspruch 1 oder 2, **dadurch gekennzeichnet**, daß bei der zweiten Einstellung verhindert wird, daß auf die lenkbaren Räder (12, 14) einwirkende Rückwirkungskräfte zu dem Lenkventil (18) übertragen werden.

4. Steuerventil nach den Ansprüchen 1-3, **dadurch gekennzeichnet**, daß das Umschalten zwischen der ersten und der zweiten Einstellung manuell vom Fahrer des Fahrzeuges bewirkt wird.

5. Steuerventil nach den Ansprüchen 1-3, **dadurch gekennzeichnet**, daß die Umschaltung zwischen der ersten und zweiten Einstellung automatisch auf der Grundlage eines Parameters bewirkt wird, die einen landwirtschaftlichen Einsatz des Fahrzeuges im Gegensatz zum Einsatz auf einer Straße anzeigt.

6. Steuerventil nach einem der vorhergehenden Ansprüche, **dadurch gekennzeichnet**, daß das Steuerventil (24) zwei Einlässe (102, 104/202, 204/302, 304) für zu dem Lenkventil (18) führende Leitungen, zwei Auslässe (106, 108/206, 208/306, 308) für Leitungen, die zu den Hydraulikzylindereinrichtungen (26, 28) führen, und zwei Einwegventile (150/250/350) aufweist, die jeweils zwischen einem jeweiligen Einlaß und einem jeweiligen Auslaß angeschlossen sind.

7. Steuerventil nach Anspruch 6, **dadurch gekennzeichnet**, daß das Steuerventil (24) weiterhin Einrichtungen (132/232/432) zur Einwirkung auf eines der Einwegventile (150/250/350) zu dessen Öffnung für eine Strömung in beiden Richtungen in Abhängigkeit von einem Überdruck an dem Einlaß aufweist, der mit dem anderen Einwegventil verbunden ist.

8. Steuerventil nach Anspruch 7, **dadurch gekennzeichnet**, daß das Steuerventil (24) weiterhin Einrichtungen (112/340, 342/420, 460) zum selektiven Ausbilden dauernder Verbindungen in beiden Richtungen zwischen den jeweiligen Einlässen (102, 104/202, 204/302, 304) und Auslässen (106, 108/206, 208/306, 38) unabhängig von den Drücken aufweist, die an den Einlässen und Auslässen anliegen.

9. Steuerventil nach den Ansprüchen 6-8, **dadurch gekennzeichnet**, daß die zwei Einwegventile (150/250/350) symmetrisch in einem Gehäuse an den Enden von in Axialrichtung ausgerichteten Bohrungen (130/240/-) angeordnet sind, wobei der auf die Einlaßseite jedes Ventils (150/250/350) wirkende Druck außerdem auf eine Fläche eines Kolbens (132/232/432) wirkt, der verschiebbar in der zugehörigen Bohrung befestigt ist, um den Kolben in Richtung auf das andere Einwegventil zu bewegen, wobei diese Bewegung dazu führt, daß der Kolben (132/232/432) direkt oder indirekt auf einen Stift (134/234/434) wirkt, der das andere Einwegventil dadurch öffnet, daß er das Ventilverschlußelement (156/256/-) des anderen Einwegventils von seinem Sitz (152) abhebt.

10. Steuerventil nach Anspruch 9, **dadurch gekennzeichnet**, daß in den miteinander ausgerichteten Bohrungen (240) zwei getrennte Kolben (232) angeordnet sind, die jeweils auf ihrer in Richtung auf das zugehörige Einwegventil (250) gerichteten Stirnfläche einen in Axialrichtung vorspringenden Stift (234) zum Abheben des Ventilverschlußteils (256) von seinem Sitz aufweisen, wobei die gegenüberliegende Stirnfläche jedes Kolbens auf einen jeweiligen von zwei weiteren Kolben (340, 342) mit größerem Durchmesser einwirkt, die durch eine weitere Arbeitskammer getrennt sind, die mit einem Steuerdruck verbindbar ist, wodurch bei Vorhandensein eines Steuerdruckes die kleineren Kolben (232) auseinanderbewegt werden und beide Einwegventile (250) für eine Strömung in beiden Richtungen öffnen, während bei Fehlen eines Steuerdruckes die vier Kolben (232, 340, 342) sich zusammen bewegen, um ein Einwegventil (250) für eine Strömung in beiden Richtungen zu öffnen, wenn ein Überdruck der Einlaßseite des anderen Einwegventils (205) zugeführt wird.

11. Steuerventil nach Anspruch 9, **dadurch gekennzeichnet**, daß ein einziger doppelwirkender Kolben (132/432) in den in Axialrichtung ausgerichteten Bohrungen (130) angeordnet ist, wobei auf jede Stirnfläche des Kolbens (132/432) der Druck einwirkt, der an der Einlaßseite eines jeweiligen der Einwegventile (150/350) vorherrscht, und wobei jede Stirnfläche einen Stift (134/434, 435) aufweist, der hiervon in Axialrichtung vorspringt und mit einer Bohrung in dem Ventilsitz (140) des anderen Einwegventils (150/350) ausgerichtet ist, wobei diese Bohrung durch das Ventilverschlußteil (156) des anderen Einwegventils (150/350) verschlossen ist, wenn das letztgenannte Ventil geschlossen ist.

12. Steuerventil nach Anspruch 8 und einem darauf rückbezogenen Anspruch,
**dadurch gekennzeichnet**, daß die Einrichtung zur Ausbildung einer dauernden Verbindung zwischen den jeweiligen Einlässen (102, 104) und den Auslässen (106, 108) Einrichtungen (118, 112, 120) zum selektiven Umgehen der Einwegventile (150) aufweist.

13. Steuerventil nach Anspruch 12, **dadurch gekennzeichnet**, daß die Einrichtung zum selektiven Umgehen der Einwegventile (150) ein Spindelventil (112) umfaßt.

14. Steuerventil nach Anspruch 11, **dadurch gekennzeichnet**, daß eines der Rückschlagventile (350) in einer einen großen Durchmesser aufweisenden Kolbenbaugruppe (460) befestigt ist, wobei die Einrichtungen zur Ausbildung einer dauernden Verbindung zwischen den jeweiligen Einlässen (302, 304) und Auslässen (306, 308) Einrichtungen (412, 420) zur Zuführung eines Steuerdruckes an ein Ende der Kolbenbaugruppe (460) umfaßt, um die Kolbenbaugruppe (460) in dem Ventilgehäuse (400) zu bewegen und den Abstand zwischen den Einwegventilen (350) zu verringern, wobei die Ventile (350) dadurch geöffnet werden, daß sie mit den Enden der Stifte (434, 435) in Kontakt kommen, die von den entgegengesetzten Stirnflächen des doppelwirkenden Kolbens (432) vorspringen.

15. Steuerventil nach Anspruch 14, **dadurch gekennzeichnet**, daß die Kolbenbaugruppe (460) in dem Ventilgehäuse (400) über eine vorgegebene Strecke (c) bewegbar ist, die größer als die maximale Bewegung eines der Ventilverschlußteile jedoch kleiner als das Doppelte dieser Bewegung ist.

## Revendications

1. Soupape de commande utilisable dans un système hydraulique de direction d'un véhicule agricole possédant l'option de direction réactive et de direction nonréactive, et comprenant une soupape de direction (18) du type réactif pour contrôler l'alimentation de fluide hydraulique vers des moyens de vérins (26, 28) possédant des chambres fonctionnelles opposées pour déplacer les roues directrices (12, 14) du véhicule dans des sens opposés, la soupape de commande (24) étant raccordable entre la soupape de direction (18) et les moyens de vérins 26, 28) et possédant un premier réglage dans lequel un débit de fluide est possible à tout moment dans les deux sens entre la soupape de direction (18) et les chambres fonctionnelles des moyens de vérins (26, 28); et
**caractérisée en ce que** la soupape de commande comprend en outre un second réglage dans lequel le débit de retour du fluide hydraulique issu d'une des chambres fonctionnelles des moyens de vérins (26, 28) vers la vanne de commande (18) est uniquement possible lorsqu'une pression positive est présente à la sortie de la soupape de direction (18) raccordée via la soupape de commande (24) avec la chambre opposée fonctionnelle des moyens de vérins (26, 28).

2. Soupape de commande selon la revendication 1, **caractérisée en ce que**, dans ledit premier réglage, des forces de réaction agissant sur les roues directrices (12, 14) sont transmises à la soupape de direction (18).

3. Soupape de commande selon la revendication 1 ou 2, **caractérisée en ce que**, dans ledit second réglage, des forces de réaction agissant sur les roues directrices (12, 14) sont empêchées d'être transmises à la soupape de direction (18).

4. Soupape de commande selon les revendications 1 à 3, **caractérisée en ce que** la commutation entre lesdits premier et second réglages est effectuée manuellement par le conducteur du véhicule.

5. Soupape de commande selon les revendications 1 à 3, **caractérisée en ce que** la commutation entre lesdits premier et second réglages est effectuée automatiquement à partir d'un paramètre indiquant une utilisation agricole du véhicule par rapport à une utilisation routière.

6. Soupape de commande selon l'une quelconque des revendications précédentes, **caractérisée en ce que** la soupape de commande (24) possède deux entrées (102, 104/202, 204/302, 304) pour les conduites menant à la soupape de direction (18), deux sorties (106, 108/206, 208/306, 308) pour les conduites menant aux moyens de vérins (26, 28) et deux soupapes à sens unique (150/250/350) raccordées chacune entre une entrée respective et une sortie respective.

7. Soupape de commande selon la revendication 6, **caractérisée en ce que** la soupape de commande (24) comprend en outre des moyens (132/232/432) pour agir sur l'une des soupapes à sens unique (150/250/350) afin de l'ouvrir pour un écoulement dans les deux sens en réponse à la présence d'une pression positive à l'entrée raccordée à l'autre soupape à sens unique.

8. Soupape de commande selon la revendication 7, **caractérisée en ce que** la soupape de commande (24) comprend en outre des moyens (112/340, 342/420, 460) pour établir sélectivement des connexions dans les deux sens entre les entrées respectives (102, 104/202, 204/302, 304) et les sorties respectives (106, 108/ 206, 208/306, 308) quelle que soit la pression présente aux entrées et aux sorties.

9. Soupape de commande selon les revendications 6 à 8, **caractérisée en ce que** les deux soupapes à sens unique (150/250/350) sont disposées symétriquement dans un logement aux extrémités d'alésages (130/240/-) alignés axialement, la pression agissant du côté de l'arrivée de chaque soupape (150/250/350) agissant également sur une face d'un piston (132/232/432) monté avec coulissement dans l'alésage associé afin de déplacer le piston dans la direction de l'autre soupape à sens unique, un tel mouvement entraînant une action directe ou indirecte du piston (132/232/432) sur une tige (134/234/434) qui ouvre l'autre soupape à sens unique en soulevant de son siège (152) l'organe de fermeture (156/256/-) de soupape de ladite autre soupape à sens unique.

10. Soupape de commande selon la revendication 9, **caractérisée en ce que** deux pistons séparés (232) se trouvent dans les alésages alignés (240) chacun possédant sur sa face dirigée vers la soupape associée à sens unique (250) une tige en extension axiale (234) destinée à soulever de son siège l'organe de fermeture de soupape (256), la face opposée de chaque piston agissant sur un ou deux pistons respectifs supplémentaires (340, 342) de diamètre plus élevé qui sont séparés par une chambre fonctionnelle supplémentaire raccordable à une pression de commande, de sorte que, en présence d'une pression de commande, les plus petits pistons (232) sont écartés et ouvrent les deux soupapes à sens unique (250) pour obtenir un écoulement dans les deux sens, et en absence de pression de commande, les quatre pistons (232, 340, 342) se déplacent de concert pour ouvrir une soupape à sens unique (250) pour obtenir un écoulement dans les deux sens lorsqu'une pression positive est appliquée au côté d'arrivée de l'autre soupape à sens unique (250).

11. Soupape de commande selon la revendication 9, **caractérisée en ce qu**'un unique piston à double action (132/432) se trouve dans les alésages alignés axialement (130), chaque face du piston (132/432) étant soumise à la pression régnant au côté d'arrivée de l'une des soupapes respectives à sens unique (150/350) et chaque face possédant une tige (134/434, 435) en saillie axiale sur elle et alignée avec un trou dans le siège de soupape (140) de l'autre soupape à sens unique (150/350), le trou étant obturé par l'organe de fermeture de soupape (156) de l'autre soupape à sens unique (150/350) lorsque cette dernière soupape est fermée.

12. Soupape de commande selon la revendication 8 et une quelconque revendication s'y rapportant, **caractérisée en ce que** les moyens d'établissement d'une connexion permanente entre les entrées (102, 104) et sorties respectives (106, 108) comprennent des moyens (118, 112, 120) de contournement sélectif des soupapes à sens unique (150).

13. Soupape de commande selon la revendication 12, **caractérisée en ce que** les moyens de contournement sélectif des soupapes à sens unique (150) comprennent une soupape à navette (112).

14. Soupape de commande selon la revendication 11, **caractérisée en ce que** l'une des soupapes anti-retour (350) est montée dans un assemblage de piston (460) de grand diamètre et où les moyens d'établissement d'une connexion permanente entre les entrées (302, 304) et sorties (306, 308) respectives comprennent des moyens (412, 420) pour appliquer une pression de commande à une extrémité de l'assemblage de piston (460) afin de déplacer cet assemblage de piston (460) dans le logement de soupape (400) et de réduire la distance entre les soupapes à sens unique (350), les soupapes (350) étant ouvertes en entrant en contact avec les extrémités des tiges (434, 435) saillant des faces opposées du piston à double action (432).

15. Soupape de commande selon la revendication 14, **caractérisée en ce que** l'assemblage de piston (460) peut se délacer dans le logement de soupape (400) sur une distance prédéterminée (c) supérieure au déplacement maximal de l'un des organes de fermeture de soupape mais inférieure au double de ce déplacement.
